# EUROPÄISCHE PATENTANMELDUNG

(11) **EP 4 480 793 A1**
(43) Veröffentlichungstag der Anmeldung: **25.12.2024**
(21) Anmeldenummer: 24163891.5
(22) Anmeldetag: 15.03.2024
(51) Int. Cl.: B62H 5/00, E05B 11/00, E05B 67/22, E05B 67/24

(54) **KLOBENSCHLOSS**

(30) Priorität: 20.06.2023 DE 102023116135
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Ein Klobenschloss umfasst einen Schlosskörper und einen Kloben (21), der wahlweise in den Schlosskörper (11) einführbar und an dem Schlosskörper verriegelbar ist. Der Schlosskörper (11) umfasst einen Schließzylinder (31), der mittels eines zugeordneten Schlüssels (33) zwischen einer Ausgangsstellung und einer Betätigungsstellung verstellbar ist; einen Riegel (41), der zwischen einer Verriegelungsstellung und einer Entriegelungsstellung bewegbar ist; und eine Sperre (51), die zwischen einer Sperrstellung und einer Freigabestellung bewegbar ist. Der Riegel (41) verriegelt in der Verriegelungsstellung den eingeführten Kloben (21) an dem Schlosskörper (11) und gibt in der Entriegelungsstellung den eingeführten Kloben (21) für ein Entfernen von dem Schlosskörper (11) frei. Durch Verstellen des Schließzylinders (31) in die Betätigungsstellung ist der Riegel (41) in die Entriegelungsstellung bewegbar. Der Schlüssel (33) ist nur in der Ausgangsstellung des Schließzylinders (31) aus dem Schließzylinder entnehmbar. Die Sperre (51) sperrt in der Sperrstellung den Schließzylinder (31) gegen eine Verstellbewegung in die Ausgangsstellung und gibt in der Freigabestellung den Schließzylinder (31) für eine Verstellbewegung in die Ausgangsstellung frei. Der in den Schlosskörper eingeführte Kloben (21) bewegt die Sperre (51) in die Freigabestellung.

## Beschreibung

Die Erfindung betrifft ein Klobenschloss mit einem Schlosskörper und einem Kloben, der wahlweise in den Schlosskörper einführbar und an dem Schlosskörper verriegelbar ist. Das Klobenschloss kann insbesondere als ein Zweirad-Rahmenschloss ausgebildet sein.

Ein derartiges Klobenschloss kann dazu dienen, ein erstes Objekt und ein zweites Objekt wahlweise aneinander festzulegen. Hierfür kann der Schlosskörper an dem ersten Objekt dauerhaft befestigt sein. Der Kloben kann dem zweiten Objekt zugeordnet sein, wobei der Kloben beispielsweise mit einer Kette oder einem Drahtseil (Metallseil, insbesondere Stahlseil) verbunden sein kann, die/das mit dem zweiten Objekt verbunden oder verbindbar ist. Beispielsweise kann es sich bei dem einen (ersten oder zweiten) Objekt um eine stationäre Verankerung handeln (zum Beispiel Gebäudewand, Fahrradständer oder Laternenpfosten), während das andere (zweite oder erste) Objekt ein Zweirad (zum Beispiel Fahrrad oder Elektrofahrrad) ist, welches wahlweise gesichert werden soll.

Wenn das Klobenschloss als ein Rahmenschloss eines Zweirads oder für ein Zweirad ausgebildet ist, kann das Klobenschloss einen (insbesondere geradlinigen) Bügel aufweisen, der dazu ausgebildet ist, in einer Geschlossenstellung ein Speichenrad des Zweirads zu durchdringen, um das Zweirad dadurch gegen ein unbefugtes Wegfahren zu sichern, wobei ein freies Ende des Bügels den genannten Kloben aufweist. In einer Offenstellung kann der Bügel hingegen aus einem Raum zurückgezogen sein, in welchem das Speichenrad während einer Fahrt mit dem Zweirad rotiert, um das Zweirad für eine solche Fahrt freizugeben. Ein derartiges Rahmenschloss kann beispielsweise an einem Rahmen des Zweirads befestigt werden oder in einen Rahmen des Zweirads integriert sein. Unter "Zweirädern" sind im vorliegenden Zusammenhang Fahrzeuge mit mindestens zwei Laufrädern zu verstehen, also beispielsweise auch Lastenräder mit drei Laufrädern. Das Fahrrad kann muskelkraftbetrieben, motorbetrieben oder motorunterstützt sein, insbesondere durch einen Elektromotor.

Damit ein derartiges Klobenschloss seine Sicherungsfunktion zuverlässig erfüllt, ist es wichtig, dass der berechtigte Benutzer das Klobenschloss ordnungsgemäß bedient, insbesondere verriegelt.

Es ist eine Aufgabe der Erfindung, ein Klobenschloss der genannten Art bereitzustellen, das eine ordnungsgemäße Bedienung durch den berechtigten Benutzer unterstützt.

Diese Aufgabe wird durch ein Klobenschloss mit den Merkmalen des Anspruchs 1 gelöst.

Das Klobenschloss weist einen Schlosskörper und einen Kloben auf, der wahlweise in den Schlosskörper einführbar und in dem eingeführten Zustand an dem Schlosskörper verriegelt werden kann. Der Schlosskörper umfasst einen Schließzylinder, der mittels eines zugeordneten Schlüssels durch eine Drehbetätigung um eine Schließzylinderachse zwischen einer Ausgangsstellung und einer Betätigungsstellung verstellbar ist. Der Schließzylinder kann bewegliche Zuhaltungen aufweisen, die mittels des zugeordneten Schlüssels aufgrund dessen Kodierung sortiert werden können. Der Schließzylinder kann beispielsweise als ein Scheibenzylinder mit drehbaren Scheibenzuhaltungen, als ein Plättchenzylinder mit geradlinig versetzbaren plättchenförmigen Zuhaltungen, oder als ein Stiftzylinder mit Stiftzuhaltungen ausgebildet sein. Der Schließzylinder kann beispielsweise ein Zylindergehäuse und einen relativ zu dem Zylindergehäuse drehbaren Zylinderkern mit einem Einführkanal zum Einführen des zugeordneten Schlüssels aufweisen.

Der Schlosskörper umfasst ferner einen Riegel, der zwischen einer Verriegelungsstellung und einer Entriegelungsstellung bewegbar ist, und eine Sperre, die zwischen einer Sperrstellung und einer Freigabestellung bewegbar ist. Der Schließzylinder, der Riegel und die Sperre können beispielsweise in einem gemeinsamen Gehäuse des Schlosskörpers gehalten oder gelagert sein.

Der Riegel des Schlosskörpers verriegelt in seiner Verriegelungsstellung den eingeführten Kloben an dem Schlosskörper. In der Entriegelungsstellung gibt der Riegel den eingeführten Kloben für ein Entfernen von dem Schlosskörper frei. Durch Verstellen des Schließzylinders in die Betätigungsstellung mittels des zugeordneten Schlüssels wird der Riegel in die Entriegelungsstellung bewegt und kann die Entriegelungsstellung insbesondere auch beibehalten, solange der Schließzylinder die Betätigungsstellung einnimmt.

Der Schlüssel kann nur in der Ausgangsstellung des Schließzylinders aus dem Schließzylinder entnommen werden. Die Ausgangsstellung des Schließzylinders kann auch als Nullstellung bezeichnet werden. In der Betätigungsstellung des Schließzylinders hingegen, also wenn der Riegel in seine Entriegelungsstellung bewegt ist, ist der Schlüssel in dem Schließzylinder gesichert und kann nicht aus dem Schließzylinder entnommen werden. Insbesondere kann auch vorgesehen sein, dass der Schlüssel in Zwischenstellungen, die zwischen der Ausgangsstellung und der Betätigungsstellung des Schließzylinders liegen, in dem Schließzylinder gefangen ist, sodass ein Entnehmen des Schlüssels aus dem Schließzylinder ausschließlich in der Ausgangsstellung möglich ist.

Ein derartiges Sichern des eingeführten Schlüssels in dem Schließzylinder kann insbesondere durch die beweglichen Zuhaltungen des Schließzylinders erfolgen.

Beispielsweise können die Zuhaltungen (insbesondere Scheibenzuhaltungen oder Plättchenzuhaltungen) eine jeweilige Einführöffnung für den Schlüssel aufweisen, wobei durch das Einführen des Schlüssels in den Schließzylinder und/oder Drehen des eingeführten Schlüssels die Zuhaltungen versetzt werden und hierdurch Anschläge bilden, an denen Kodiermerkmale des Schlüssels (z.B. Erhebung, Umrandung der jeweiligen Einführöffnung) direkt oder indirekt anliegen und die somit ein Herausziehen des Schlüssels aus dem Schließzylinder verhindern, bis der Schließzylinder wieder in die Ausgangsstellung gebracht ist. Alternativ oder zusätzlich ist es möglich, dass die Zuhaltungen (insbesondere Stiftzuhaltungen) in Kodiervertiefungen (zum Beispiel Kerben oder Mulden) des Schlüssels eingreifen und aus den Kodiervertiefungen nicht zurückweichen können, solange der Schließzylinder nicht wieder in die Ausgangsstellung gebracht ist (zum Beispiel wenn Kernbohrungen und Gehäusebohrungen für die Stiftzuhaltungen in Flucht gebracht sind). Ein Sichern des eingeführten Schlüssels in dem Schließzylinder kann beispielsweise auch durch ein Sicherungselement erfolgen, welches die Schlüsselspitze formschlüssig umgreift und somit ein Herausziehen des Schlüssels aus dem Schließzylinder verhindert, solange der Schlüssel sich nicht in einer der Ausgangsstellung des Schließzylinders entsprechenden Nullstellung befindet.

Die Sperre des Schlosskörpers sperrt in ihrer Sperrstellung den Schließzylinder gegen eine Verstellbewegung in die Ausgangsstellung. Hierdurch verhindert die Sperre, dass der Schlüssel aus dem Schließzylinder entnommen werden kann. In ihrer Freigabestellung hingegen gibt die Sperre den Schließzylinder für eine Verstellbewegung in die Ausgangsstellung frei, sodass der Schließzylinder mittels des zugeordneten Schlüssels in die Ausgangsstellung verstellt werden kann und der Schlüssel wieder aus dem Schließzylinder entnommen werden kann. Die Sperre und der Kloben sind dazu ausgebildet, dass der Kloben - wenn der Kloben in den Schlosskörper eingeführt wird - die Sperre in die Freigabestellung bewegt und insbesondere die Sperre auch in der Freigabestellung hält, solange der Kloben in den Schlosskörper eingeführt ist.

Die Kombination aus Riegel und Sperre, die jeweils mit dem in den Schlosskörper eingeführten Kloben zusammenwirken, bildet zusammen mit dem Schließzylinder eine automatische Schlüsselsicherungsfunktion. Der berechtigte Benutzer kann somit nur dann den Schüssel aus dem Schließzylinder entnehmen, wenn der Kloben in den Schlosskörper eingeführt ist, wodurch die Sperre in die Freigabestellung bewegt ist. Hingegen kann nach einer Entriegelungsbetätigung und nach einem Entfernen des Klobens der Schlüssel nicht entnommen werden, da in diesem Zustand die Sperre eine Betätigung des Schließzylinders in die Ausgangsstellung verhindert. Vielmehr ist der Benutzer gezwungen, den Kloben wieder in den Schlosskörper einzuführen, um hierdurch die Sperre in Freigabestellung zu bewegen, woraufhin der Schließzylinder in die Ausgangsstellung verstellt werden kann (entsprechend der Verriegelungsstellung des Riegels). Der Benutzer kann somit ein ordnungsgemäßes Verriegeln des Klobens am Schlosskörper nicht leicht vergessen, da er ansonsten den Schlüssel nicht entnehmen und mitführen kann.

Weitere Ausführungsformen der Erfindung sind nachfolgend erläutert.

Bei einigen Ausführungsformen ist der Schließzylinder zwischen der Ausgangsstellung und der Betätigungsstellung ohne Federunterstützung verstellbar, beispielsweise ohne Torsionsfeder, welche den Schließzylinder in die eine oder andere Stellung vorspannen würde. Vielmehr kann vorgesehen sein, dass der Schließzylinder in beide Richtungen mittels des zugeordneten Schlüssels aktiv betätigt werden muss.

Bei einigen Ausführungsformen nimmt der Riegel die Verriegelungsstellung ein, wenn der Schließzylinder sich in der Ausgangsstellung befindet. Der in den Schlosskörper eingeführte Kloben ist hierdurch zuverlässig verriegelt, wenn der Schließzylinder die Ausgangsstellung einnimmt und der Schlüssel somit entnommen werden kann. Folglich ist gewährleistet, dass der Kloben an dem Schlosskörper verriegelt ist, wenn der Schlüssel aus dem Schließzylinder entnommen wird.

Bei einigen Ausführungsformen kann der Riegel in Richtung der Verriegelungsstellung vorgespannt sein. Hierdurch kann eine Verriegelungsautomatik verwirklicht werden. Dies bedeutet, dass der Kloben infolge des Einführens in den Schlosskörper automatisch an dem Schlosskörper verriegelt wird, wobei der Riegel entgegen seiner Vorspannung von dem Kloben temporär zurückgedrängt wird und sodann in einen Verriegelungseingriff mit dem Kloben gerät. Nachfolgend kann der Schließzylinder in seine Ausgangsstellung verstellt werden, und der Schlüssel kann aus dem Schließzylinder entnommen werden. Für das Antreiben des Riegels durch den Kloben entgegen der Vorspannung können an dem Riegel und/oder an dem Kloben geeignete Antriebsschrägen ausgebildet sein.

Bei einigen Ausführungsformen nimmt die Sperre die Sperrstellung ein, wenn der Kloben von dem Schlosskörper entfernt ist. Hierdurch wird verhindert, dass der Schließzylinder in seine Ausgangsstellung verstellt werden kann, obwohl der Kloben nicht in den Schlosskörper eingeführt ist.

Bei einigen Ausführungsformen kann die Sperre in Richtung der Sperrstellung vorgespannt sein. Hierdurch kann ein besonders zuverlässiger Betrieb des Klobenschlosses erreicht werden, da die Sperre somit grundsätzlich ein Verstellen des Schließzylinders in seine Ausgangsstellung verhindert, sofern die Sperre nicht aktiv entgegen ihrer Vorspannung in ihre Freigabestellung bewegt wird. Die Sperre kann insbesondere durch den Kloben zu einer Bewegung in die Freigabestellung angetrieben werden, nämlich durch Einführen des Klobens in den Schlosskörper. Hierfür können an der Sperre und/oder an dem Kloben geeignete Antriebsschrägen ausgebildet sein.

Bei einigen Ausführungsformen können der Riegel und die Sperre schwimmend gelagert und durch eine gemeinsame Vorspannfeder vorgespannt sein. Die Vorspannung des Riegels und der Sperre kann insbesondere in zueinander entgegengesetzte Richtungen erfolgen. Insbesondere können hierdurch der Riegel in Richtung der Verriegelungsstellung und zugleich die Sperre in Richtung der Sperrstellung vorgespannt sein, wobei eine einzige Vorspanneinrichtung erforderlich ist (z.B. eine Druckfeder).

Bei einigen Ausführungsformen kann der Schließzylinder einen drehbaren Nocken aufweisen. Durch Verstellen des Schließzylinders zwischen der Ausgangsstellung unter Betätigungsstellung kann der Nocken gedreht werden. Der Nocken kann beispielsweise mit einem drehbaren Zylinderkern des Schließzylinders direkt gekoppelt sein (zum Beispiel einstückig ausgebildet). Der Nocken kann dazu ausgebildet sein, eine mittels des zugeordneten Schlüssels erzeugte Antriebsbewegung auf den Riegel zu übertragen. Der Nocken kann eine Bewegung entlang einer Kreisbahn um die Schließzylinderachse durchführen.

Bei einigen Ausführungsformen kann der Nocken des Schließzylinders einen Antriebsabschnitt aufweisen, der bei dem Verstellen des Schließzylinders in die Betätigungsstellung den Riegel in Richtung seiner Entriegelungsstellung antreibt.

Alternativ oder zusätzlich kann der Nocken einen Anschlagabschnitt aufweisen, der an der Sperre anschlägt, wenn die Sperre sich in der Sperrstellung befindet und der Schließzylinder von der Betätigungsstellung in Richtung der Ausgangsstellung verstellt wird.

Bei einigen Ausführungsformen kann die Sperre einen Sperrabschnitt und einen Freigabeabschnitt aufweisen, wobei in der Sperrstellung der Sperre der Sperrabschnitt den Nocken des Schließzylinders gegen die Verstellbewegung des Schließzylinders in die Ausgangsstellung sperrt, und wobei in der Freigabestellung der Sperre der Freigabeabschnitt den Nocken des Schließzylinders für die Verstellbewegung des Schließzylinders in die Ausgangsstellung freigibt. Der Freigabeabschnitt der Sperre kann - bezüglich der Bewegungsrichtung des Nockens - insbesondere relativ zu dem Sperrabschnitt zurückversetzt sein.

Bei einigen Ausführungsformen kann der Kloben entlang einer Klobeneinführrichtung in den Schlosskörper eingeführt werden (insbesondere geradlinig), wobei der Schlüssel entlang der Schließzylinderachse in den Schließzylinder einführbar ist, und wobei die Schließzylinderachse senkrecht zu der Klobeneinführrichtung ausgerichtet ist. Somit kann die Betätigung des Schließzylinders mittels des zugeordneten Schlüssels durch den Benutzer außerhalb der Bewegungsbahn des Klobens erfolgen. Hierdurch ist eine ungestörte Betätigung des Schließzylinders möglich. Ferner ist ein einfacher und effizienter Antrieb des Riegels und/oder der Sperre durch eine Drehbetätigung des Schließzylinders möglich, insbesondere über den vorstehend genannten Nocken des Schließzylinders.

Bei einigen Ausführungsformen können der Riegel und die Sperre geradlinig beweglich gelagert sein.

Bei einigen Ausführungsformen kann der Riegel einen flachen Lagerabschnitt aufweisen, der sich entlang einer Ebene senkrecht zu der Schließzylinderachse erstreckt und senkrecht zu der Schließzylinderachse beweglich ist, wobei die Sperre ebenfalls einen flachen Lagerabschnitt aufweist, der sich entlang einer Ebene senkrecht zu der Schließzylinderachse erstreckt und senkrecht zu der Schließzylinderachse sowie parallel zu dem Riegel beweglich ist. Der Lagerabschnitt des Riegels und der Lagerabschnitt der Sperre können insbesondere aneinander anliegen, um eine gegenseitige geradlinige Führung zu bilden. Hierdurch ist eine besonders einfache und kleinvolumige Lagerung des Riegels in der Sperre möglich. Insbesondere können der Riegel und die Sperre an einer Unterseite des Schlosskörpers und/oder des Schließzylinders gelagert sein, wodurch sich ein besonders flacher Aufbau des Schlosskörpers ergibt.

Bei einigen Ausführungsformen können der Riegel und die Sperre als gestanzte und gefaltete Metallbleche ausgebildet sein.

Bei einigen Ausführungsformen kann der Riegel einen Verriegelungsabschnitt aufweisen, der von dem Lagerabschnitt des Riegels quer, insbesondere senkrecht absteht. Der Verriegelungsabschnitt des Riegels kann dazu ausgebildet sein, in der Verriegelungsstellung des Riegels in eine Eingriffsvertiefung des Klobens (insbesondere die vorstehend genannte Eingriffsvertiefung) einzugreifen.

Bei einigen Ausführungsformen kann die Sperre einen Antriebsabschnitt aufweisen, der von dem Lagerabschnitt der Sperre quer, insbesondere senkrecht absteht. An dem Antriebsabschnitt der Sperre kann eine Antriebsschräge ausgebildet sein (insbesondere die vorstehend genannte Antriebsschräge), über welche der Kloben infolge seines Einführens in den Schlosskörper die Sperre zu der Bewegung in die Freigabestellung antreiben kann.

Bei einigen Ausführungsformen kann der Kloben eine Eingriffsvertiefung aufweisen, in welche der Riegel in der Verriegelungsstellung eingreift. Die Eingriffsvertiefung kann insbesondere als eine umfänglich verlaufende Nut ausgebildet sein. Der Kloben kann einen im Wesentlichen zylindrischen Einführabschnitt aufweisen, der in den Schlosskörper eingeführt wird. Der Kloben kann bei einigen Ausführungsformen an seinem freien Ende eine Einführschräge und/oder Antriebsschräge aufweisen, insbesondere in Form einer kegelförmigen oder kegelstumpfförmigen Spitze. Die Antriebsschräge des Klobens kann mit dem Riegel und/oder mit der Sperre zusammenwirken, um infolge eines Einführens des Klobens in den Schlosskörper den Riegel oder die Sperre zurückzudrängen.

Die Erfindung bezieht sich auch auf ein Rahmenschloss eines Zweirads oder für ein Zweirad, wobei das Rahmenschloss ein Klobenschloss der genannten Art sowie einen (insbesondere geradlinigen) Bügel aufweist, der dazu ausgebildet ist, in einer Geschlossenstellung ein Speichenrad des Zweirads zu durchdringen, wobei ein freies Ende des Bügels den genannten Kloben aufweist. Hierfür kann der Schlosskörper an einem Rahmenabschnitt des Zweirads befestigt oder in einen Rahmenabschnitt des Zweirads integriert sein (wobei der Rahmenabschnitt ein Gehäuse des Schlosskörpers bilden kann). Der Bügel kann entlang einer geradlinigen Einführrichtung in eine Einführöffnung des Schlosskörpers, welche in Richtung des Speichenrads weist, eingeführt werden. In dieser Geschlossenstellung kann das Ende des Bügels (Kloben) an dem Schlosskörper verriegelt werden. Hierdurch wird das Speichenrad gegen eine Rotation blockiert, und der zugeordnete Schlüssel kann - wie erläutert - aus dem Schließzylinder entnommen werden. Sofern nachfolgend der Bügel durch entsprechende Betätigung des Schließzylinders entriegelt wird, kann der Bügel aus dem Schlosskörper und aus der Bewegungsbahn des Speichenrads entfernt werden. In dieser Offenstellung ist das Zweirad für eine Fahrt freigegeben, wobei der Schlüssel an dem Schlosskörper gesichert ist. Der Bügel kann in der Offenstellung dauerhaft mit dem Schlosskörper verbunden oder von dem Schlosskörper vollständig getrennt sein.

Die Erfindung wird nachfolgend lediglich beispielhaft unter Bezugnahme auf die Zeichnungen erläutert.
- Fig. 1: zeigt ein Klobenschloss in einer Perspektivansicht.
- Fig. 2: zeigt das Klobenschloss in einer Explosionsansicht von oben.
- Fig. 3: zeigt das Klobenschloss in einer Explosionsansicht von unten.
- Fig. 4A bis 4C: zeigen das Klobenschloss bei nicht oder nicht vollständig eingeführtem Kloben, und zwar (A) in einer Unteransicht, (B) in einer teilweise aufgeschnittenen Perspektivansicht von oben und (C) in einer Perspektivansicht von oben.
- Fig. 5A bis 5C: zeigen das Klobenschloss bei eingeführtem und verriegeltem Kloben in den drei Ansichten gemäß Fig. 4.
- Fig. 6A bis 6C: zeigen das Klobenschloss bei eingeführtem und entriegeltem Kloben in den drei Ansichten gemäß Fig. 4.
- Fig. 7A bis 7C: zeigen das Klobenschloss bei entriegeltem und entnommenem Kloben in den drei Ansichten gemäß Fig. 4.

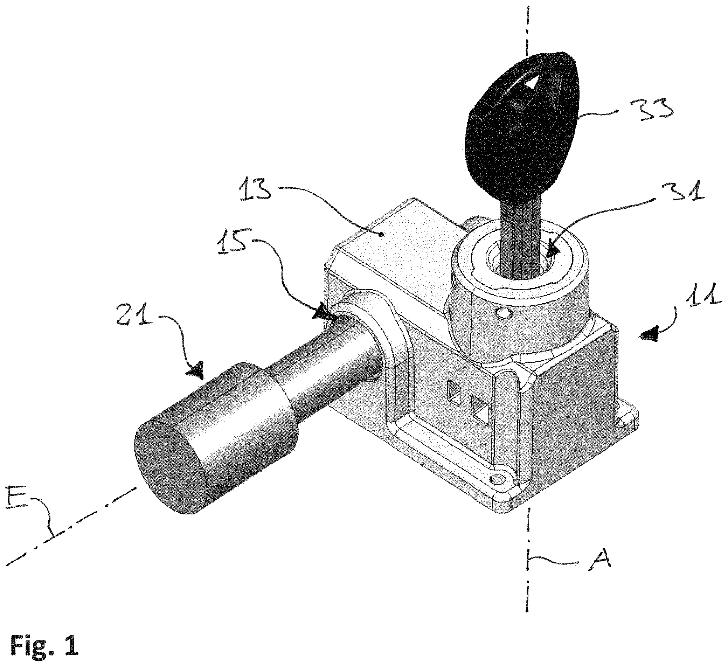

Die Figuren zeigen eine mögliche Ausführungsform eines Klobenschlosses, das einen Schlosskörper 11 und einem Kloben 21 aufweist, der wahlweise entlang einer Klobeneinführrichtung E in den Schlosskörper 11 einführbar und an dem Schlosskörper 11 verriegelbar ist (Fig. 1). Der Schlosskörper 11 umfasst ein Gehäuse 13 mit einer Einführöffnung 15 für den Kloben 21.

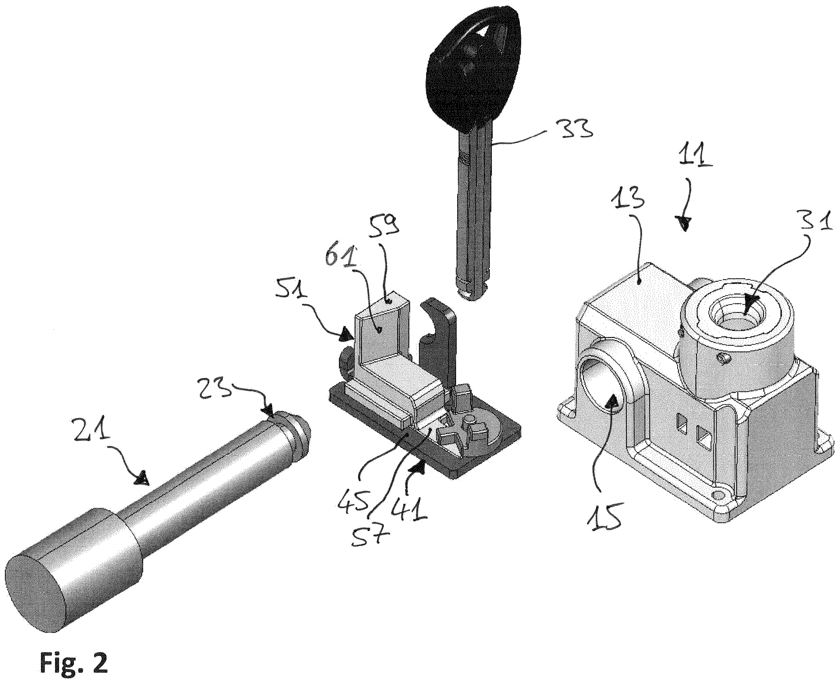

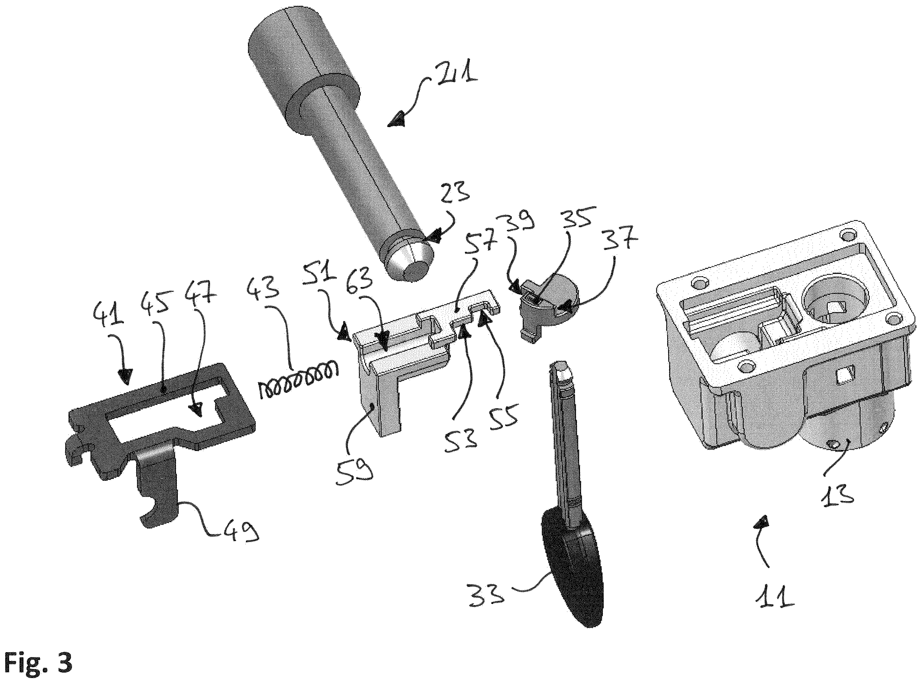

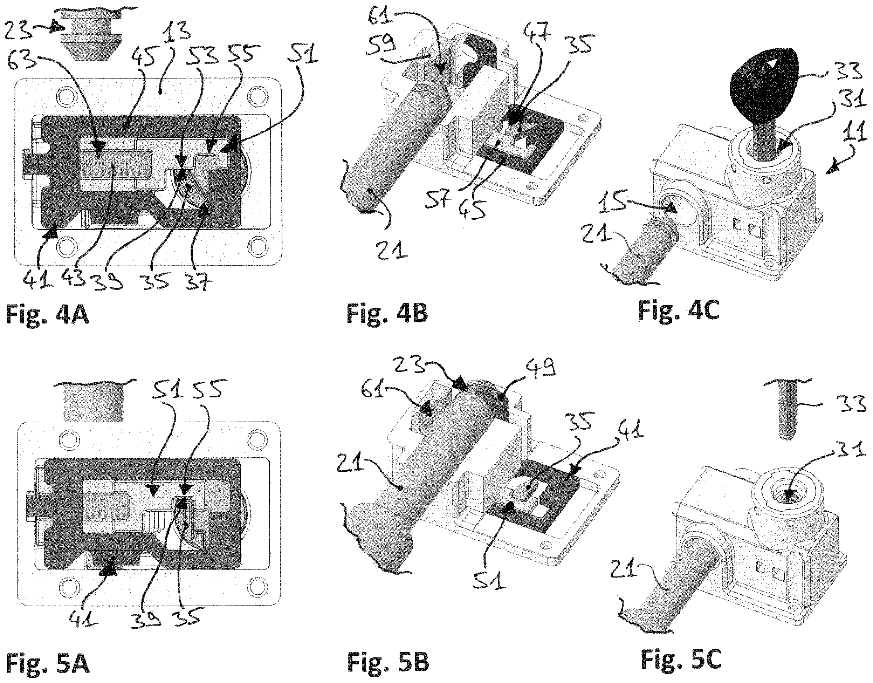

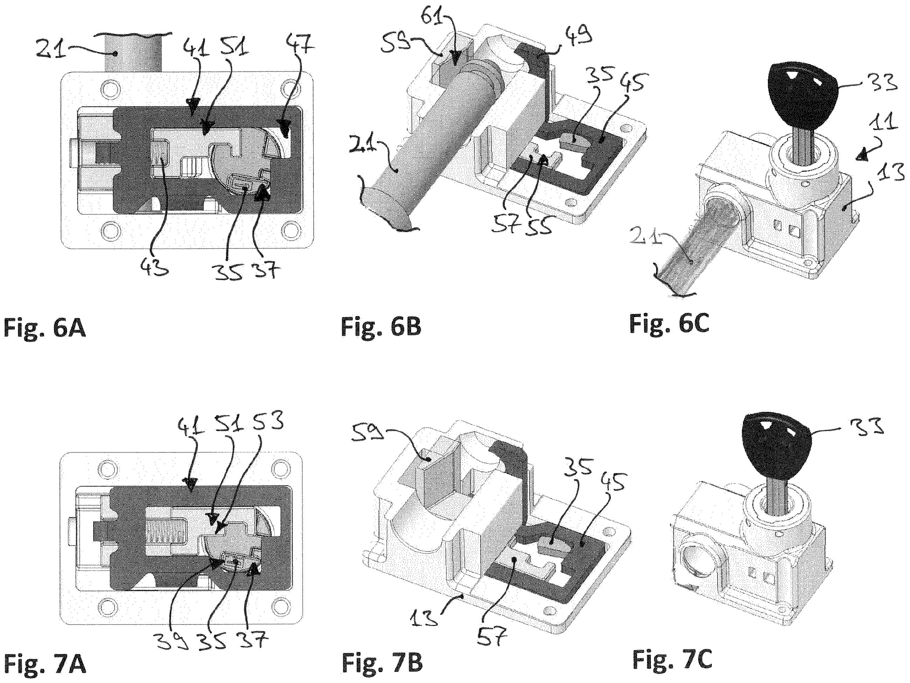

Innerhalb des Gehäuses 13 umfasst der Schlosskörper 11 einen Schließzylinder 31 (nicht gesondert gezeigt), der mittels eines zugeordneten Schlüssels 33 durch eine Drehbetätigung um eine Schließzylinderachse A zwischen einer Ausgangsstellung (Fig. 1) und einer Betätigungsstellung (Fig. 6C) verstellbar ist; einen Riegel 41 (Fig. 2 und 3), der zwischen einer Verriegelungsstellung (Fig. 5A) und einer Entriegelungsstellung (Fig. 6a) bewegbar ist; und eine Sperre 51 (Fig. 2 und 3), die zwischen einer Sperrstellung (Fig. 4A) und einer Freigabestellung (Fig. 5A) bewegbar ist.

Der Schlüssel 33 ist entlang der Schließzylinderachse A in den Schließzylinder 31 einführbar, wobei die Schließzylinderachse A senkrecht zu der Klobeneinführrichtung E ausgerichtet ist. Der Schließzylinder 31 ist dazu ausgebildet, den eingeführten Schlüssel 33 lediglich dann für ein Entnehmen freizugeben, wenn der Schließzylinder 31 und somit der Schlüssel 33 sich in der Ausgangsstellung (Fig. 1, Fig. 5C) befinden.

Der Riegel 41 und die Sperre 51 sind geradlinig beweglich gelagert. Der Riegel 41 und die Sperre 51 sind schwimmend gelagert und durch eine gemeinsame Vorspannfeder 43 in zueinander entgegengesetzte Richtungen vorgespannt (Fig. 3). Die Vorspannfeder 43 ist zwischen dem Riegel 41 und der Sperre 51 eingespannt.

Der Riegel 41 weist einen flachen Lagerabschnitt 45 auf, der sich entlang einer Ebene senkrecht zu der Schließzylinderachse A erstreckt und senkrecht zu der Schließzylinderachse A beweglich ist. Der Lagerabschnitt 45 umfasst eine Steueröffnung 47. Die Sperre 51 weist ebenfalls einen flachen Lagerabschnitt 57 auf, der sich koplanar zu dem Lagerabschnitt 45 des Riegels 41 entlang einer Ebene senkrecht zu der Schließzylinderachse A erstreckt und senkrecht zu der Schließzylinderachse A sowie parallel zu dem Riegel 41 beweglich ist, wobei der Lagerabschnitt 45 des Riegels 41 und der Lagerabschnitt 57 der Sperre 51 aneinander anliegen und somit eine geradlinige gegenseitige Führung bilden. Der Riegel 41 weist ferner einen Verriegelungsabschnitt 49 auf, der von dem Lagerabschnitt 45 des Riegels 41 senkrecht absteht und dazu ausgebildet ist, in der Verriegelungsstellung in eine umlaufende Eingriffsvertiefung 23 des Klobens 21 einzugreifen. Die Sperre 51 weist einen Antriebsabschnitt 59 auf, der von dem Lagerabschnitt 57 der Sperre 51 senkrecht absteht. An dem Antriebsabschnitt 59 der Sperre 51 ist eine Antriebsschräge 61 ausgebildet, über welche der Kloben 21 infolge seines Einführens in den Schlosskörper 11 die vorgespannte Sperre 51 zurückdrängen kann. Ferner weist die Sperre 51 zwischen dem Lagerabschnitt 57 und dem Antriebsabschnitt 59 eine längliche halbzylindrische Vertiefung 63 auf, in der die Vorspannfeder 43 aufgenommen ist.

Der Schließzylinder 31 weist einen Nocken 35 auf, der mittels des in den Schließzylinder 31 eingeführten Schlüssel 33 durch eine Drehbetätigung zu einer Drehbewegung um die Schließzylinderachse A angetrieben werden kann. Hierfür ist der Nocken 35 drehfest mit der Unterseite eines drehbaren Zylinderkerns (nicht gezeigt) des Schließzylinders 31 verbunden. Der Nocken 35 ist im Wesentlichen kreissegmentförmig und greift in die Steueröffnung 47 des Lagerabschnitts 45 des Riegels 41 ein. Der Nocken 35 weist einen Antriebsabschnitt 37 und einen Anschlagabschnitt 39 auf. Der Anschlagabschnitt 39 des Nocken 35 wirkt je nach Position der Sperre 51 mit einem Sperrabschnitt 53 oder einem Freigabeabschnitt 55 der Sperre 51 zusammen, wie nachstehend noch erläutert wird.

Nachfolgend wird anhand der Fig. 4 bis 7 die Funktionsweise des gezeigten Klobenschlosses erläutert, wobei in den Fig. 4 bis 7 die drei Illustrationen das Klobenschloss jeweils (A) in einer Unteransicht, (B) in einer teilweise aufgeschnittenen Perspektivansicht von oben und (C) in einer Perspektivansicht von oben zeigen.

Gemäß Fig. 4 ist der Kloben 21 nicht oder nicht vollständig in den Schlosskörper 11 eingeführt. Der Schlüssel 33 steckt in dem Schließzylinder 31 (Fig. 4C). Der Schließzylinder 31 befindet sich in einer Zwischenstellung, die zwischen der Ausgangsstellung und der Betätigungsstellung liegt. Der Riegel 41 und die Sperre 51 ragen aufgrund ihrer jeweiligen Vorspannung in die Bewegungsbahn des Klobens 21 innerhalb des Gehäuses 13. Wie sich den Fig. 4A und 4B entnehmen lässt, liegt der Anschlagabschnitt 39 des Nockens 35 an dem Sperrabschnitt 53 der Sperre 51 an. Hierfür befindet sich die Sperre 51 in der Sperrstellung, in der die Sperre 51 den Schließzylinder 31 gegen eine Verstellbewegung in die Ausgangsstellung sperrt. Hierdurch wird also verhindert, dass der Nocken 35 - und somit der Schlüssel 33 - in die Ausgangsstellung (Fig. 1) gedreht werden können. Diese Drehbewegung in Richtung der Ausgangsstellung würde in Fig. 4A im Uhrzeigersinn und in Fig. 4C entgegen dem Uhrzeigersinn erfolgen.

Gemäß Fig. 5 ist der Kloben 21 vollständig in den Schlosskörper 11 eingeführt und in dem Schlosskörper 11 verriegelt. Hierfür befindet sich der Riegel 41, nachdem der Riegel 41 von der Spitze des Klobens 21 entgegen der Kraft der Vorspannfeder 43 temporär zurückgedrängt wurde, aufgrund seiner Vorspannung in der Verriegelungsstellung, in welcher der Riegel 41 mit seinem Verriegelungsabschnitt 49 in die Eingriffsvertiefung 23 des Klobens 21 eingreift. Die Sperre 51 ist über ihre Antriebsschräge 61 von dem in den Schlosskörper 11 eingeführten Kloben 21 entgegen der Kraft der Vorspannfeder 43 in die Freigabestellung zurückgedrängt worden, in der die Sperre 51 den Schließzylinder 31 für eine Verstellbewegung in die Ausgangsstellung freigibt. Hierfür befindet sich der Freigabeabschnitt 55 der Sperre 51 auf Höhe des Nockens 35 des Schließzylinders 31. Somit kann nun durch Drehbetätigung des Schlüssels 33 in die Ausgangsstellung der Anschlagabschnitt 39 des Nockens 35 in den Freigabeabschnitt 55 der Sperre 51 hineingedreht werden (Fig. 5A). In der somit erreichten Ausgangsstellung des Schließzylinders 31 kann der Schlüssel 33 aus dem Schließzylinder 31 entnommen werden (Fig. 5C). Der Kloben 21 ist nun an dem Schlosskörper 11 verriegelt.

Gemäß Fig. 6 befindet sich der Schließzylinder 31 nun in der Betätigungsstellung. Hierfür wurde der Schlüssel 33 ausgehend von Fig. 5 um ca. 90 Grad gedreht, und zwar bezogen auf die Unteransicht gemäß Fig. 6A entgegen dem Uhrzeigersinn und bezogen auf die Draufsicht gemäß Fig. 6C im Uhrzeigersinn. Diese Drehbetätigung des Schlüssels 33 bewirkt eine entsprechende Drehung des Nockens 35, sodass der Antriebsabschnitt 37 des Nockens 35 den Riegel 41 in Richtung seiner Entriegelungsstellung (Fig. 6A) antreibt. In der Entriegelungsstellung gibt der Riegel 41 den Kloben 21 für ein Entfernen von dem Schlosskörper 11 frei.

Gemäß Fig. 7 ist der Kloben aus dem Schlosskörper 11 entfernt. Der Schlüssel 33 befindet sich immer noch in der Betätigungsstellung. Die Sperre 51 nimmt aufgrund ihrer Vorspannung jedoch wieder die Sperrstellung ein (Fig. 7A). Der Schlüssel 33 kann nun zwar ausgehend von der Betätigungsstellung wieder in Richtung der Ausgangsstellung gedreht werden. Jedoch kann der Schließzylinder 31 nicht vollständig in die Ausgangsstellung verstellt werden, da schließlich der Anschlagabschnitt 39 des Nockens 35 an dem Sperrabschnitt 53 der Sperre 51 anschlägt, wie im Zusammenhang mit Fig. 4 erläutert. Der Schlüssel 33 ist somit im Schlosskörper 11 gefangen.

Im Ergebnis besitzt das gezeigten Klobenschloss eine automatische Schlüsselsicherungsfunktion. Der Benutzer kann den Schüssel 33 nur dann aus dem Schließzylinder 31 entnehmen und mitführen, wenn der Kloben 21 in dem Schlosskörper 11 verriegelt ist.

Zu dem in den Fig. gezeigten Klobenschloss ist noch anzumerken, dass dieses auch Teil eines Rahmenschlosses eines Zweirads oder für ein Zweirad sein kann, wobei das Rahmenschloss einen geradlinigen oder gekrümmten Bügel aufweist, dessen Ende den Kloben 21 bildet.

### Bezugszeichenliste

- 11: Schlosskörper
- 13: Gehäuse
- 15: Einführöffnung
- 21: Kloben
- 23: Eingriffsvertiefung
- 31: Schließzylinder
- 33: Schlüssel
- 35: Nocken
- 37: Antriebsabschnitt
- 39: Anschlagabschnitt
- 41: Riegel
- 43: Vorspannfeder
- 45: Lagerabschnitt
- 47: Steueröffnung
- 49: Verriegelungsabschnitt
- 51: Sperre
- 53: Sperrabschnitt
- 55: Freigabeabschnitt
- 57: Lagerabschnitt
- 59: Antriebsabschnitt
- 61: Antriebsschräge
- 63: Vertiefung
- A: Schließzylinderachse
- E: Klobeneinführrichtung

## Patentansprüche

1. Klobenschloss, insbesondere Zweirad-Rahmenschloss,
mit einem Schlosskörper (11) und einem Kloben (21), der wahlweise in den Schlosskörper (11) einführbar und an dem Schlosskörper (11) verriegelbar ist;
wobei der Schlosskörper (11) umfasst:
einen Schließzylinder (31), der mittels eines zugeordneten Schlüssels (33) durch eine Drehbetätigung um eine Schließzylinderachse (A) zwischen einer Ausgangsstellung und einer Betätigungsstellung verstellbar ist;
einen Riegel (41), der zwischen einer Verriegelungsstellung und einer Entriegelungsstellung bewegbar ist; und
eine Sperre (51), die zwischen einer Sperrstellung und einer Freigabestellung bewegbar ist;
wobei der Riegel (41) in der Verriegelungsstellung den eingeführten Kloben (21) an dem Schlosskörper (11) verriegelt und in der Entriegelungsstellung den eingeführten Kloben (21) für ein Entfernen von dem Schlosskörper (11) freigibt;
wobei durch Verstellen des Schließzylinders (31) in die Betätigungsstellung der Riegel (41) in die Entriegelungsstellung bewegbar ist;
wobei der Schlüssel (33) nur in der Ausgangsstellung des Schließzylinders (31) aus dem Schließzylinder (31) entnehmbar ist;
wobei die Sperre (51) in der Sperrstellung den Schließzylinder (31) gegen eine Verstellbewegung in die Ausgangsstellung sperrt und in der Freigabestellung den Schließzylinder (31) für eine Verstellbewegung in die Ausgangsstellung freigibt; und
wobei der in den Schlosskörper (11) eingeführte Kloben (21) die Sperre (51) in die Freigabestellung bewegt.

2. Klobenschloss nach Anspruch 1,
wobei der Riegel (41) die Verriegelungsstellung einnimmt, wenn der Schließzylinder (31) sich in der Ausgangsstellung befindet.

3. Klobenschloss nach Anspruch 1 oder 2,
wobei der Riegel (41) in Richtung der Verriegelungsstellung vorgespannt ist.

4. Klobenschloss nach einem der vorhergehenden Ansprüche,
wobei die Sperre (51) die Sperrstellung einnimmt, wenn der Kloben (21) von dem Schlosskörper (11) entfernt ist.

5. Klobenschloss nach einem der vorhergehenden Ansprüche,
wobei die Sperre (51) in Richtung der Sperrstellung vorgespannt ist.

6. Klobenschloss nach einem der vorhergehenden Ansprüche,
wobei der Riegel (41) und die Sperre (51) schwimmend gelagert sind und durch eine gemeinsame Vorspannfeder (43) vorgespannt sind.

7. Klobenschloss nach einem der vorhergehenden Ansprüche,
wobei der Schließzylinder (31) einen drehbaren Nocken (35) aufweist.

8. Klobenschloss nach Anspruch 7,
wobei der Nocken (35) einen Antriebsabschnitt (37) aufweist, der bei dem Verstellen des Schließzylinders (31) in die Betätigungsstellung den Riegel (41) in Richtung der Entriegelungsstellung antreibt.

9. Klobenschloss nach Anspruch 7 oder 8,
wobei der Nocken (35) einen Anschlagabschnitt (39) aufweist, der an der Sperre (51) anschlägt, wenn die Sperre (51) sich in der Sperrstellung befindet und der Schließzylinder (31) von der Betätigungsstellung in Richtung der Ausgangsstellung verstellt wird.

10. Klobenschloss nach einem der Ansprüche 7 bis 9,
wobei die Sperre (51) einen Sperrabschnitt (53) und einen Freigabeabschnitt (55) aufweist, wobei in der Sperrstellung der Sperre (51) der Sperrabschnitt (53) den Nocken (35) des Schließzylinders (31) gegen die Verstellbewegung des Schließzylinders (31) in die Ausgangsstellung sperrt und wobei in der Freigabestellung der Sperre (51) der Freigabeabschnitt (55) den Nocken (35) des Schließzylinders (31) für die Verstellbewegung des Schließzylinders (31) in die Ausgangsstellung freigibt.

11. Klobenschloss nach einem der vorhergehenden Ansprüche,
wobei der Kloben (21) entlang einer Klobeneinführrichtung (E) in den Schlosskörper (11) einführbar ist, wobei der Schlüssel (33) entlang der Schließzylinderachse (A) in den Schließzylinder (31) einführbar ist, und wobei die Schließzylinderachse (A) senkrecht zu der Klobeneinführrichtung (E) ausgerichtet ist.

12. Klobenschloss nach einem der vorhergehenden Ansprüche,
wobei der Riegel (41) und die Sperre (51) geradlinig beweglich gelagert sind.

13. Klobenschloss nach einem der vorhergehenden Ansprüche,
wobei der Riegel (41) einen flachen Lagerabschnitt (45) aufweist, der sich entlang einer Ebene senkrecht zu der Schließzylinderachse (A) erstreckt und senkrecht zu der Schließzylinderachse (A) beweglich ist, wobei die Sperre (51) einen flachen Lagerabschnitt (57) aufweist, der sich entlang einer Ebene senkrecht zu der Schließzylinderachse (A) erstreckt und senkrecht zu der Schließzylinderachse (A) sowie parallel zu dem Riegel (41) beweglich ist.

14. Klobenschloss nach Anspruch 13,
wobei der Lagerabschnitt (45) des Riegels (41) und der Lagerabschnitt (57) der Sperre (51) koplanar angeordnet sind und aneinander anliegen.

15. Rahmenschloss eines Zweirads oder für ein Zweirad, wobei das Rahmenschloss ein Klobenschloss nach einem der vorhergehenden Ansprüche sowie einen Bügel aufweist, der dazu ausgebildet ist, in einer Geschlossenstellung ein Speichenrad des Zweirads zu durchdringen, wobei ein Ende des Bügels den genannten Kloben (21) aufweist.
